# EUROPÄISCHE PATENTSCHRIFT

(11) **EP 4 402 391 B1**
(45) Veröffentlichungstag und Bekanntmachung des Hinweises auf die Patenterteilung: **17.12.2025**
(21) Anmeldenummer: 22748224.7
(22) Anmeldetag: 26.07.2022
(51) Int. Cl.: F16D 65/18, F16D 66/00, F16D 65/08, F16D 65/092, F16D 66/02, F16D 69/00, G01B 5/00, G01L 1/00, G01L 1/16

(54) **VORRICHTUNG ZUM ERFASSEN DER ZUSPANNKRÄFTE ZWISCHEN EINEM BREMSKÖRPER UND EINEM BREMSROTOR EINER SCHEIBEN- ODER TROMMELBREMSE**
DEVICE FOR REGISTERING THE BRAKE APPLICATION FORCES BETWEEN A BRAKE MEMBER AND A BRAKE ROTOR OF A DISC OR DRUM BRAKE
DISPOSITIF D'ENREGISTREMENT DES FORCES D'APPLICATION DE FREINAGE ENTRE UN ÉLÉMENT DE FREINAGE ET UN DISQUE DE FREIN D'UN FREIN À DISQUE OU À TAMBOUR

(30) Priorität: 15.09.2021 AT 507272021
(43) Veröffentlichungstag der Anmeldung: 24.07.2024
(73) Patentinhaber: Net-Automation GmbH, 8755 St. Peter ob Judenburg (AT)
(72) Erfinder: RIEGER, Walter, 8755 St. Peter ob Judenburg (AT); THEUERMANN, Gernot, 8755 St. Peter ob Judenburg (AT); ZUBER, Christian, 8755 St. Peter ob Judenburg (AT)
(74) Vertreter: Hübscher & Partner Patentanwälte GmbH
(86) Internationale Anmeldenummer: PCT/AT2022/060267
(87) Internationale Veröffentlichungsnummer: WO 2023/039621

(56) Entgegenhaltungen:
- EP-A1- 3 722 768
- WO-A1-2007/094993
- JP-A- 2007 224 988

## Beschreibung

### Technisches Gebiet

Die Erfindung bezieht sich auf eine Vorrichtung zum Erfassen von Zuspannkräften zwischen einem Bremskörper und einem Bremsrotor einer Scheiben- oder Trommelbremse mit einer zwischen Bremskörper und Bremsrotor einführbaren, mehrschichtigen Messfolie aus einer Sensorschicht mit sich druckabhängig ändernden elektrische Eigenschaften und aus zwei an eine Auswerteeinrichtung angeschlossenen, elektrisch leitenden Schichten.

### Stand der Technik

Um die während einer Fahrzeugbremsung auftretenden Bremskräfte zu erfassen, ist es bei Scheibenbremsen bekannt (DE 10 2006 018 952 A1, WO 2014/170726 A1), zwischen den Bremsbelägen und den Bremsbelagträgern an eine elektrische Auswerteeinrichtung angeschlossene Kraftaufnehmer auf der Basis von Piezoelementen vorzusehen. Nachteilig ist allerdings, dass diese Kraftaufnehmer bei der Konstruktion der Scheibenbremsen berücksichtigt werden müssen und aufgrund des Einsatzes von Piezoelementen zwar für die Erfassung von bei der Fahrzeugbremsung wirksam werdenden Bremskräfte geeignet sind, nicht aber für die Erfassung der statischen Zuspannkräfte.

Zur Ermittlung der bei Scheiben- oder Trommelbremsen wirkenden Zuspannkräfte ist es bereits bekannt (WO 2005/015045 A1), Kraftaufnehmer einzusetzen, deren elektrischer Widerstand sich mit dem Beaufschlagungsdruck ändert. Solche Kraftaufnehmer können wiederum zwischen den mit einer Bremsscheibe oder einer Bremstrommel zusammenwirkenden Bremskörpern und den Bremskörperträgern vorgesehen sein. Es ist aber auch möglich, statt eines solchen Kraftaufnehmers den Bremskörper selbst als Sensor mit sich druckabhängig ändernden elektrischen Widerstandswerten einzusetzen. Das Vorsehen eines entsprechenden Sensors oder einer Sensorschicht muss jedoch bei der Konstruktion der Scheiben- oder Trommelbremse berücksichtigt werden, sodass die Erfassung der Zuspannkräfte nur bei entsprechend ausgestatteten Scheiben- oder Trommelbremsen möglich ist.

Schließlich ist es zur Bestimmung der Zuspannkräfte einer Scheiben- oder Trommelbremse bekannt (EP 3 722 768 A1), zwischen dem Bremskörper und dem Bremsrotor eine mehrschichtige Messfolie aus einer Sensorschicht mit sich druckabhängig ändernden elektrischen Eigenschaften einzuführen. Mithilfe zweier elektrisch leitender Schichten wird das sich druckabhängig ändernde, elektrische Messsignal abgegriffen und einer Auswerteeinrichtung zugeführt, in der aufgrund der bekannten Druckabhängigkeit des elektrischen Messsignals die auftretenden Zuspannkräfte ermittelt werden. Nachteilig ist allerdings, dass die Zuspannkräfte auf die Fläche der Sensorschicht bezogen werden müssen, sodass bei einer beispielsweise durch Herstellungstoleranzen oder Verschleiß bedingten, nur teilweisen Druckbeaufschlagung der Sensorfolie zu kleine Zuspannkräfte ermittelt werden.

Im Übrigen ist eine Sensoranordnung bekannt (DE 102016106071 A1), mit deren Hilfe ortsaufgelöst die Stelle der Kraft- bzw. Druckeinwirkung ermittelt und zusätzlich auch der Betrag der einwirkenden Kraft bzw. des einwirkenden Drucks erfasst werden kann. Zu diesem Zweck umfasst die Sensoranordnung zwei durch eine Mittelschicht voneinander getrennte Gewebelagen, die zwei zueinander senkrecht verlaufende Scharen paralleler, voneinander elektrisch isolierter Leiter bilden. Dadurch ergibt sich ein Raster sich kreuzender Leiter, die beim Auftreten einer Kraft in einem Kreuzungsbereich durch die Mittelschicht hindurch elektrisch kontaktiert werden, sodass die beiden zufolge der Krafteinwirkung kontaktierten, zueinander senkrecht verlaufenden Leiter die Kontaktierungsstelle bestimmen. Die Mittelschicht, für die anstelle eines Gewebematerials alternativ auch ein Folienmaterial verwendet werden kann, kann ein Dielektrikum aus einem nicht elektrisch leitfähigem Material bilden, wodurch sich eine kapazitive Sensoranordnung nach Art eines Plattenkondensators ergibt. Die mittlere Lage kann aber auch ein piezoelektrisches Material für eine piezoelektrische Sensoranordnung oder ein elektrisch leitfähiges Material aufweisen, dessen elektrischer Widerstand sich bei Kraft- bzw. Druckeinwirkung ändert, so dass eine resistive bzw. piezoresistive Sensoranordnung gebildet wird. Wegen der lokal begrenzten, durch die Kreuzungsstellen der elektrischen Leiter der äußeren Gewebelagen bestimmten Messbereiche ist eine solche Sensoranordnung jedoch ungeeignet, die über eine Bremsfläche verteilten Zuspannkräfte einer Bremse zu erfassen.

### Darstellung der Erfindung

Der Erfindung liegt somit die Aufgabe zugrunde, einfache, konstruktive Voraussetzungen zu schaffen, um die zwischen einem Bremskörper und einem Bremsrotor einer Scheiben- oder Trommelbremse wirksamen Zuspannkräfte genauer erfassen zu können.

Ausgehend von einer Vorrichtung der eingangs geschilderten Art löst die Erfindung die gestellte Aufgabe dadurch, dass die Messfolie zur Zuordnung der ermittelten Zuspannkräfte zu der der jeweiligen Druckbeaufschlagung ausgesetzten Fläche der Sensorschicht zwei an die Auswerteeinrichtung angeschlossene Elektrodenschichten zur Bestimmung der Folienkapazität zwischen den Elektrodenschichten aufweist.

Wirkt der Bremskörper nicht vollflächig auf den Bremsrotor einer Scheiben- oder Trommelbremse, so bedeutet dies, dass zwischen dem Bremskörper und dem Bremsrotor unterschiedliche Abstände wirksam sind, die die Kapazität der zwischen Bremskörper und Bremsrotor eingespannten Messfolie beeinflussen, sodass mit einer entsprechenden Kapazitätsmessung zusätzlich die Anpressfläche bestimmt werden kann, um die mithilfe der Sensorschicht erfassten Zuspannkräfte auf diese Anpressfläche beziehen zu können. Es braucht somit die Messfolie lediglich mit zwei an die Auswerteeinrichtung angeschlossenen Elektrodenschichten zur Bestimmung der Folienkapazität versehen zu werden, anhand der dann auf die jeweilige Anpressfläche zwischen Bremskörper und Bremsrotor rückgeschlossen wird, sodass die Auswerteeinrichtung die Zuspannkräfte in Abhängigkeit von der jeweiligen Anpressfläche wiedergibt.

Als Sensorschicht eignet sich insbesondere eine piezoresistive Schicht, deren spezifischer elektrischer Widerstand sich unter Einwirkung einer mechanischen Spannung ändert, die durch eine Druckbelastung des piezoresistiven Schichtmaterials entsteht. Als Sensorschicht eignen sich vorteilhaft entsprechend dotierte Halbleiter, z. B. auf Silicium- oder Germaniumbasis oder III-V-Halbleiter.

### Kurze Beschreibung der Erfindung

In der Zeichnung ist der Erfindungsgegenstand beispielsweise dargestellt. Es zeigen
- Fig. 1: eine erfindungsgemäße Vorrichtung in einem schematischen Blockschaltbild und
- Fig. 2: einen schematischen Schichtaufbau einer erfindungsgemäßen, mehrschichtigen Messfolie.

### Wege zur Ausführung der Erfindung

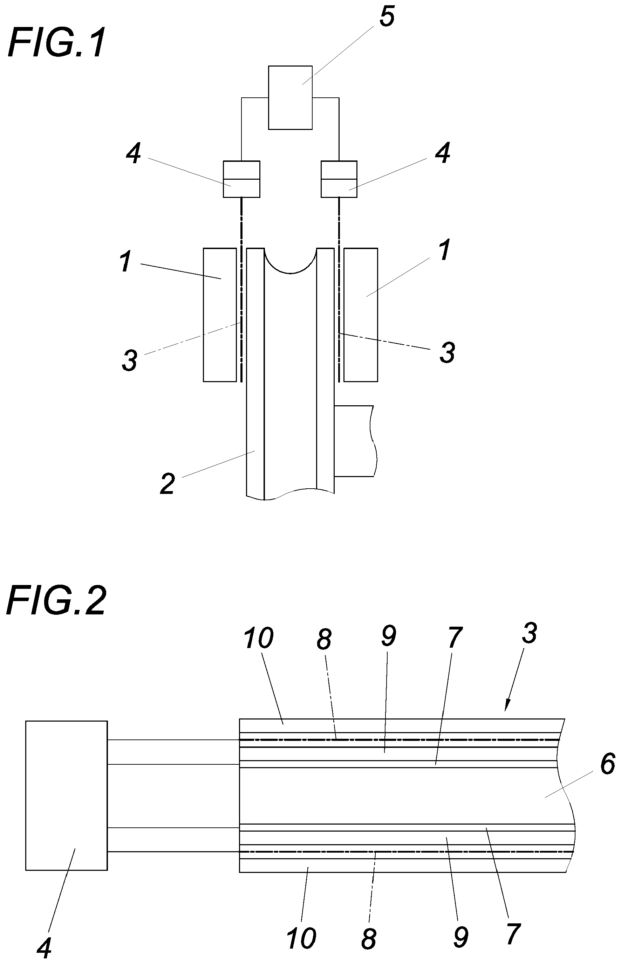

Eine erfindungsgemäße Vorrichtung zum Erfassen der Zuspannkräfte zwischen einem Bremskörper 1 und einem Bremsrotor 2 einer im Ausführungsbeispiel als Scheibenbremse angedeuteten Bremse umfasst gemäß der Fig. 1 eine mehrschichtige Messfolie 3, die durch eine Steckkupplung 4 mit einer Auswerteeinrichtung 5 elektrisch verbunden ist. Die Auswerteeinrichtung dient vorzugsweise nicht nur zur Auswertung der Messsignale der Messfolie 3, sondern auch zur Beaufschlagung der Messfolie mit elektrischer Energie.

Die mehrschichtige Messfolie 3 weist gemäß der Fig. 2 eine Sensorschicht 6 aus einem Material auf, dessen elektrische Eigenschaften sich mit dem Beaufschlagungsdruck ändern, wie dies insbesondere für piezoresistive Materialien gegeben ist. Die Sensorschicht 6 ist zwischen zwei elektrisch leitenden Schichten 7 angeordnet, über die eine elektrische Messspannung an die piezoresistive Sensorschicht 6 angelegt werden kann. Da sich der spezifische elektrische Widerstand der Sensorschicht 6 mit dem Beaufschlagungsdruck ändert, kann aufgrund der gegebenen Druckabhängigkeit des spezifischen elektrischen Widerstands aus der Größe des durch die Sensorschicht 6 fließenden elektrischen Stroms auf die Druckbelastung der Sensorschicht 6 und damit auf die Größe der einwirkenden Kräfte rückgeschlossen werden. Die Fläche der Sensorschicht 6 ist ja konstruktiv vorgegeben und daher bekannt.

Voraussetzung für ein entsprechendes Messergebnis ist allerdings, dass der Beaufschlagungsdruck sich gleichmäßig über die Fläche der Sensorschicht 6 verteilt, wovon jedoch im Allgemeinen nicht ausgegangen werden kann. Um die Größe einer jeweils einer Druckbeaufschlagung ausgesetzte Fläche der Sensorschicht 6 abschätzen zu können, wird zusätzlich eine Kapazitätsmessung zwischen zwei Elektrodenschichten 8 vorgenommen, die die elektrisch leitenden Schichten 7 unter Zwischenlage einer Isolierschicht 9 abdecken. Zum Schutz der Messfolie 3 können zusätzliche Deckschichten 10 vorgesehen werden.

Da die Folienkapazität von der jeweiligen Fläche abhängt, die dem Druck zwischen dem Bremskörper 1 und dem Bremsrotor 2 ausgesetzt wird, kann anhand einer solchen Kapazitätsmessung auf den Flächenanteil der Sensorschicht 6 rückgeschlossen werden, der dem Beaufschlagungsdruck durch die Zuspannkräfte ausgesetzt ist, was eine Zuordnung der ermittelten Zuspannkräfte zu der der jeweiligen Druckbeaufschlagung ausgesetzten Fläche der Sensorschicht 6 erlaubt.

Durch die zusätzliche Kapazitätsmessung, für die nicht zwingend zwei gesonderte Elektrodenschichten 8 vorgesehen werden müssen, weil eine der elektrisch leitenden Schichten 7 auch als Elektrodenschicht für die Kapazitätsmessung genützt werden kann, wird der Handhabungsaufwand nicht vergrößert. Es ist lediglich die Messfolie 3 in den Spalt zwischen Bremskörper 1 und Bremsrotor 2 einzubringen und am Bremsrotor 2 oder am Bremskörper 1 festzuhalten, bevor die Messfolie 3 mittels der Steckkupplung 4 mit einer Auswerteeinrichtung 5 verbunden und nach einer Beaufschlagung der Bremse die Messung begonnen wird.

Die Verbindung zwischen der Messfolie 3 mit der Auswerteeinrichtung 5 kann selbstverständlich auch drahtlos erfolgen, wie es auch möglich ist, die Auswerteeinrichtung 5 mit der Messfolie 3 zu einer Baueinheit zusammenzuschließen.

## Patentansprüche

1. Vorrichtung zum Erfassen von Zuspannkräften zwischen einem Bremskörper (1) und einem Bremsrotor (2) einer Scheiben- oder Trommelbremse, wobei die Vorrichtung eine zwischen Bremskörper (1) und Bremsrotor (2) einführbare, mehrschichtige Messfolie (3) umfasst, die aus einer Sensorschicht (6) mit sich druckabhängig ändernden elektrische Eigenschaften und aus zwei an eine Auswerteeinrichtung (5) angeschlossenen, elektrisch leitenden Schichten (7) besteht, **dadurch gekennzeichnet, dass** die mehrschichtige Messfolie (3) zur Zuordnung der ermittelten Zuspannkräfte zu der der jeweiligen Druckbeaufschlagung ausgesetzten Fläche der Sensorschicht (6) zwei an die Auswerteeinrichtung (5) angeschlossene Elektrodenschichten (8) zur Bestimmung der Folienkapazität zwischen den Elektrodenschichten (8) aufweist.

2. Vorrichtung nach Anspruch 1, **dadurch gekennzeichnet, dass** die Sensorschicht (6) eine piezoresistive Schicht bildet.

## Claims

1. Apparatus for detecting the clamping forces between a brake body (1) and a brake rotor (2) of a disc brake or drum brake, comprising a multi-layer measuring film (3) which can be inserted between the brake body (1) and the brake rotor (2) and which multi-layer measuring film (3) comprises a sensor layer (6) with pressure-dependent changing electrical properties and two electrically conductive layers (7) connected to an evaluation device (5), **characterized in that** the multi-layer measuring film (3) has two electrode layers (8) connected to the evaluation device (5) for determining the film capacitance between the electrode layers (8) in order to assign the determined clamping forces to the area of the sensor layer (6) exposed to the respective pressurization.

2. Apparatus according to claim 1, **characterized in that** the sensor layer (6) forms a piezoresistive layer.

## Revendications

1. °/ Dispositif d'enregistrement de forces d'application de serrage entre un élément de freinage (1) et un disque de frein (2) d'un frein à disque ou à tambour, dans lequel le dispositif comprend un film de mesure multicouche (3) qui peut être introduit entre l'élément de freinage (1) et le disque de frein (2) et qui est composé d'une couche de détection (6) avec des caractéristiques électriques qui changent en fonction de la pression et de deux couches électriquement conductrices (7) reliées à un système d'évaluation (5), **caractérisé en ce que** le film de mesure multicouche (3) présente deux couches d'électrode (8) reliées au système d'évaluation (5) pour déterminer la capacité de film entre les couches d'électrode (8) afin d'attribuer les forces d'application de serrage déterminées à la face de la couche de détection (6) qui est soumise à l'application de pression respective.

2. °/ Dispositif selon la revendication 1, **caractérisé en ce que** la couche de détection (6) forme une couche piézorésistive.
